# FASCICULE DE BREVET EUROPEEN

(11) **EP 0 512 900 B1**
(45) Date de publication et mention de la délivrance du brevet: **27.09.1995**
(21) Numéro de dépôt: 92401226.3
(22) Date de dépôt: 30.04.1992
(51) Int. Cl.: C03B 7/06, C03B 7/02, C03B 7/07

(54) **Procédé et dispositif pour obtenir les températures désirées pour un courant de verre dans un feeder**
Verfahren und Vorrichtung zum Erreichen der gewünschten Temperatur eines Glasstromes in einem Speiserkanal
Method and apparatus for obtaining wanted temperatures for a glass stream in a feeder channel

(30) Priorité: 07.05.1991 FR 9105563
(43) Date de publication de la demande: 11.11.1992
(73) Titulaire: SAINT-GOBAIN EMBALLAGE, 92400 Courbevoie (FR)
(72) Inventeur: Viel, Charles-Henry, F-71100 Châlon S/Saône (FR)
(74) Mandataire: Muller, René

(56) Documents cités:
- EP-A- 0 145 427
- WO-A-83/01440
- DE-A- 3 119 816
- FR-A- 2 220 480
- FR-A- 2 564 086
- US-A- 1 879 718

## Description

La présente invention concerne les canaux de distribution du verre fondu, encore appelés feeders, destinés à transférer le verre fondu du four de fusion à une machine de formage ou de moulage.

La température du verre fondu délivré sous forme de paraisons aux machines de formage dépend du type et des dimensions de l'article à former, et en général plus l'article est lourd et plus la température de la paraison doit être basse. Il est donc généralement nécessaire de refroidir le verre entre la sortie du four et la machine de formage, le refroidissement étant d'autant plus important que l'article est lourd.

Le refroidissement nécessaire du verre doit être contrôlé pour amener le verre à la température d'utilisation désirée à proximité de l'extrémité de sortie du feeder et cela sur toute la largeur du chenal.

Différents procédés et dispositifs ont déjà été proposés pour atteindre ce but. Ils utilisent généralement un refroidissement de la partie médiane du courant de verre et un chauffage simultané des parties latérales dudit courant. Ainsi, dans la publication de brevet français FR-A-2 220 480, on refroidit la partie centrale du courant à l'aide d'un flux gazeux, de l'air par exemple, s'écoulant suivant l'axe longitudinal du canal au contact du verre, en même temps que l'on chauffe les deux parties latérales du courant de verre.

Ce procédé et ce dispositif donnent entière satisfaction et permettent avec un même feeder d'alimenter les machines de formage ou de moulage, en paraisons présentant le poids et la température désirés choisis dans des larges gammes de poids et de températures.

Cependant, il apparait encore souhaitable d'étendre la gamme des articles pouvant être fabriqués à partir de paraisons fournies par un même feeder de longueur donnée. Cette extension de gamme lorsqu'elle s'opère vers des produits plus lourds et obtenus à partir de paraisons présentant des températures relativement peu élevées, nécessite une possibilité d'évacuation d'une quantité de chaleur très importante, difficile à réaliser avec le seul procédé décrit ci-dessus.

L'invention propose un procédé et un dispositif ou feeder permettant d'obtenir les différences de températures désirées et pouvant être très importantes entre la sortie du four et la sortie du feeder, tout en conservant une homogénéité de température dans le courant de verre, transversalement par rapport au chenal, à proximité de ladite sortie du feeder.

Selon le procédé de l'invention, dans au moins une zone entre la sortie du four de fusion et l'extrémité de sortie du feeder, on refroidit la partie centrale du courant de verre et on chauffe simultanément les parties latérales dudit courant, ces opérations de refroidissement et de chauffage étant précédées d'un refroidissement du courant de verre par évacuation contrôlée d'une partie de la chaleur dudit courant par radiation à l'air libre.

Le procédé selon l'invention utilise donc une opération de refroidissement par une évacuation contrôlée d'une partie de la chaleur du courant de verre par radiation à l'air libre dans une zone, dite zone de refroidissement, intermédiaire entre le four et une zone de conditionnement qui utilise un chauffage des parties latérales du courant de verre et un refroidissement simultané par ventilation de la partie médiane dudit courant de verre.

Dans la zone de refroidissement, l'action de refroidissement du courant de verre peut être intense, tout en étant contrôlée. Dans la zone de conditionnement, on amène le verre à la température désirée par des actions combinées de chauffage et refroidissement par ventilation.

Dans cette zone de conditionnement, le chauffage des parties latérales peut s'effectuer à l'aide de brûleurs, ou de résistances électriques ou encore à l'aide d'électrodes. La ventilation destinée au refroidissement de la partie médiane du courant de verre peut être une ventilation transversale ou avantageusement une ventilation longitudinale comme décrit dans le document FR-A-2 220 480 déjà cité.

Le refroidissement par radiation à l'air libre selon l'invention est avantageusement modulable dans le sens de la largeur du courant de verre.

Le refroidissement par radiation peut ainsi avantageusement être prévu pour pouvoir s'exercer essentiellement sur une ou plusieurs partie(s) préférée(s) de la largeur du courant de verre. Cette partie préférée peut être la partie médiane du courant de verre ou au contraire une ou les deux partie(s) latérale(s) de ce courant de verre. Il peut aussi être prévu pour s'étendre d'une partie localisée de la largeur du courant jusqu'à toute cette largeur.

Le choix de la zone d'action du refroidissement par radiation dans le sens transversal dépend des températures du courant de verre dans ces différentes zones avant le refroidissement et des températures désirées après ce refroidissement.

Le refroidissement par radiation pouvant être modulable et différencié dans le sens transversal est particulièrement avantageux dans le cas des feeders tournants, c'est-à-dire des feeders présentant un coude, par exemple à angle droit, pour lesquels se pose le problème des températures différentes entre les deux veines latérales du courant de verre, du fait de la différence de longueur entre les chemins parcourus par ces veines latérales.

Le refroidissement par radiation peut donc être modulable et peut être réglé pour pouvoir s'exercer symétriquement ou dissymétriquement sur une plage transversale du courant de verre pouvant aller d'une partie localisée à toute la largeur du courant.

L'invention concerne également un dispositif ou feeder apte à transférer le verre fondu du four de fusion aux machines de formage ou de moulage, tout en l'amenant à la température désirée et homogène.

Le dispositif ou feeder selon l'invention présente dans sa partie amont un compartiment refroidisseur intermédiaire entre le four et une partie aval de conditionnement équipée de moyens de chauffage pour les parties latérales du courant de verre et de moyens pour le refroidissement, préférablement par ventilation, de la partie médiane du courant de verre, cette partie aval de conditionnement étant avantageusement constituée d'au moins un dispositif comme décrit dans le FR-A-2 220 480 déjà cité, et dont la description est incorporée ici par cette référence, équipée de moyens de chauffage des deux parties latérales du courant de verre et de moyens pour refroidir par une ventilation longitudinale sous la voûte, la partie centrale du courant de verre. Le compartiment intermédiaire refroidisseur étant muni d'au moins un panneau pouvant être ouvert de façon contrôlée à l'air libre afin de permettre l'évacuation désirée de la chaleur par radiation. Le feeder selon l'invention est donc la combinaison dudit compartiment refroidisseur et d'un feeder connu.

Le procédé et le dispositif selon l'invention permettent de baisser fortement, le cas échéant, la température et ce, de façon contrôlée, entre le four et la machine de formage, sans allonger sensiblement le feeder, et de délivrer un verre ayant la qualité et la température désirées à la machine de formage.

Dans une forme de réalisation avantageuse du dispositif, le panneau permettant l'ouverture à l'air libre présente une surface variable, pouvant être augmentée ou réduite progressivement ou par paliers, chaque palier pouvant lorsque le panneau est formé de plusieurs éléments, correspondre à l'ouverture ou à la fermeture de ces éléments ou panneaux de voûtes. La position de l'ouverture peut en outre être réglable transversalement.

L'ouverture du panneau qui, lorsque sa surface est réduite, peut être localisée dans la partie centrale de la voûte, peut s'étendre transversalement symétriquement ou dissymétriquement jusqu'à concurrence de toute la largeur de la voûte lorsque l'ouverture doit être plus grande pour permettre une évacuation de la chaleur plus importante.

Sous un des aspects de l'invention, le compartiment est équipé de plusieurs panneaux de voûte pouvant être ouverts séparément ou en combinaison.

En jouant sur l'ouverture ou non de chacun des panneaux on peut modifier et régler la zone d'action du refroidissement par radiation et son intensité.

Selon une réalisation du dispositif selon l'invention, le compartiment refroidisseur est équipé de 5 panneaux adjacents l'un à l'autre et disposés transversalement par rapport à l'axe du feeder.

Ce système à plusieurs panneaux à ouverture modulable permet un très bon contrôle du refroidissement.

A titre d'indication, le compartiment refroidisseur du feeder selon l'invention permet le cas échéant une évacuation de l'ordre de 25 thermies par heure.

Sous un des aspects avantageux de l'invention, l'ouverture à l'air libre du compartiment refroidisseur permet d'introduire dans le courant de verre, s'il est utile, un refroidisseur annexe, par exemple un refroidisseur qui trempe dans le courant de verre pour pouvoir en retirer une quantité de chaleur supplémentaire.

D'autres avantages et caractéristiques de l'invention apparaitront dans la suite de la description d'un exemple de réalisation, faite en référence aux figures.

La figure 1 représente en coupe longitudinale un feeder selon l'invention.

La figure 2 est une section transversale de la partie conditionnement du feeder.

La figure 3 est une section longitudinale de la partie amont correspondant au compartiment refroidisseur du feeder représenté dans la figure 1.

La figure 4 représente en vue de plan, cette partie amont.

La figure 5 représente une coupe transversale de la partie supérieure du compartiment refroidisseur avec un système d'ouverture des panneaux.

La figure 6 est une vue de côté du compartiment refroidisseur et du système d'ouverture représenté sur la figure 5.

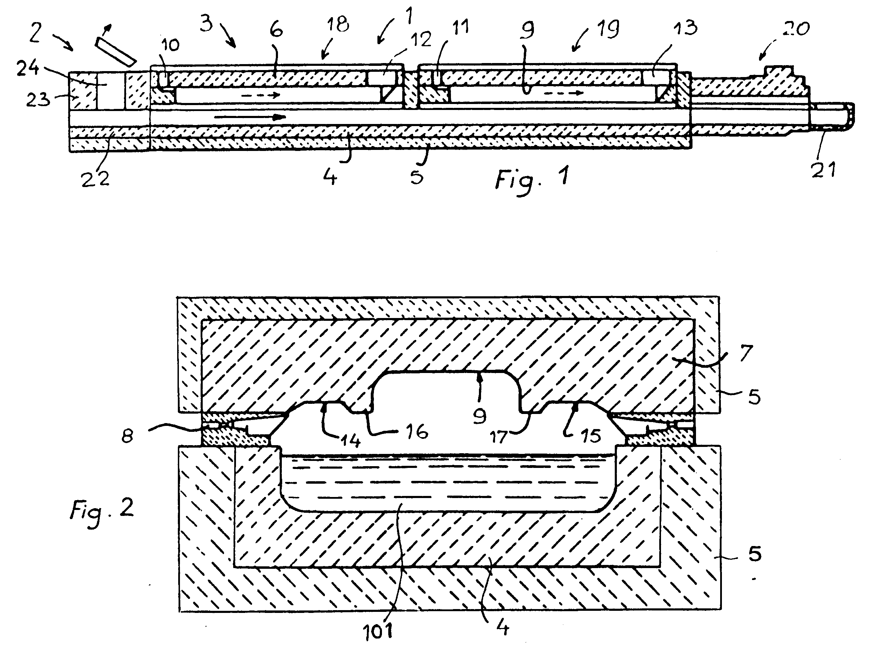

Le feeder 1 représenté sur les figures 1 et 2 comprend une partie amont 2 formée d'un compartiment refroidisseur et une partie aval 3 de conditionnement comprenant un chenal 4 isolé thermiquement de l'extérieur par un revêtement réfractaire isolant 5 et une voûte 6 coiffant le chenal également isolée. Les parois latérales 7 de la voûte de la partie aval 3 sont munies de dispositif de chauffage 8, ici des brûleurs, destinés à réchauffer les parties latérales du courant de verre 101 dont le sens d'écoulement est indiqué par une flèche. La voûte 6 présente une structure formant un couloir central 9 pour la ventilation à l'aide d'un fluide gazeux, par exemple de l'air introduit par les ouvertures 10, 11 et s'échappant par les cheminées 12, 13, (le courant d'air est figuré par des flèches en pointillés), destiné à refroidir la partie médiane du courant de verre, et deux couloirs latéraux 14, 15 qui se prêtent au réchauffage des parties latérales du courant de verre. Les deux couloirs latéraux sont délimités du couloir central par des appendices longitudinaux 16, 17.

La partie aval 3 du feeder représentée ici comprend deux sections semblables 18, 19 de réchauffage et de ventilation longitudinale.

L'extrémité aval 20 du feeder dans laquelle s'effectue la dernière homogénéisation du verre se termine par un ou plusieurs orifices 21 pour le passage de la ou des paraisons, afin d'alimenter la machine de formage ou moulage non représentée.

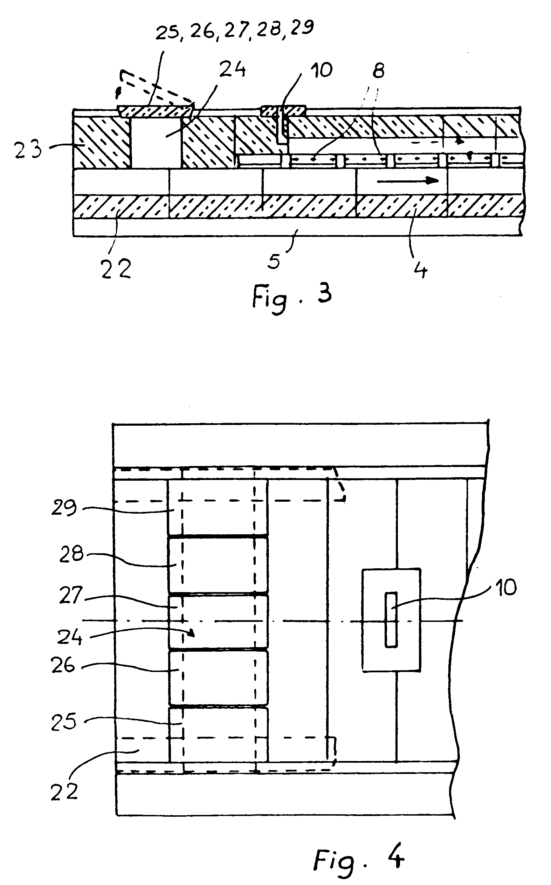

La partie amont 2 correspondant au compartiment refroidisseur, présente un chenal 22 semblable à celui de la partie aval, pour le passage du courant de verre. La partie supérieure ou voûte 23 présente, comme représentée sur les figures 1, 3 et 4 une large ouverture 24 obturée par 5 panneaux mobiles 25, 26, 27, 28, 29, pouvant être ouverts progressivement et séparément à l'aide d'un système décrit plus en détail par la suite. Les cinq panneaux présentent ici une même surface. L'ouverture qui peut avantageusement se faire par pivotement peut ainsi varier en fonction du degré de pivotement et du nombre de panneaux soulevés. Le sens d'ouverture est avantageusement celui représenté sur les figures, c'est-à-dire vers l'amont. On évite par ce sens d'ouverture de soumettre à des contraintes thermiques encore plus importantes la canalisation d'apport de l'air de ventilation (non représentée sur les figures) que l'on branche à l'entrée d'air voisine 10.

La longueur d'un panneau est comprise par exemple entre 20 et 50 cm, la largeur étant comprise par exemple entre 20 et 40 cm et correspond dans la réalisation décrite à 1/5 de la largeur de la voûte.

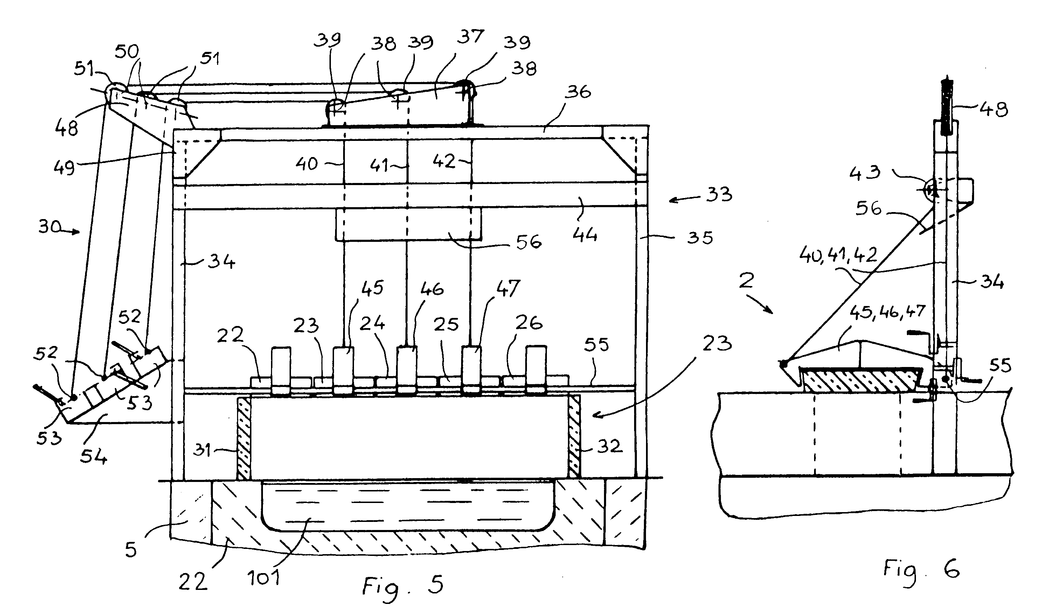

Sur les figures 5 et 6, on a représenté la partie supérieure 23 du compartiment refroidisseur 2, et une partie du système 30 permettant de soulever les panneaux mobiles.

La partie supérieure 23 présente deux parois latérales 31, 32 séparées ici dans cet exemple de réalisation d'une distance supérieure à la largeur du chenal pour le passage du courant de verre. La voûte est partagée en cinq parties correspondant aux cinq panneaux horizontaux mobiles 25, 26, 27, 28, 29. Un portique 33 formé de deux mâts 34, 35 et d'une poutre transversale 36 surplombe le compartiment refroidisseur 2. La poutre transversale 36 porte dans sa partie médiane un palier 37 sur lequel sont montés les axes 38 de trois poulies 39 guidant des cables 40, 41, 42 qui passent encore autour de trois autres poulies 43 portées par une traverse inférieure 44, et dont l'extrémité de chacun d'eux est attachée à un bord d'une pince-support 45, 46, 47 pour chacun des trois panneaux centraux obturant l'ouverture du compartiment. Une potence 48 fixée à un coin 49 du portique 33 fait office de palier pour les axes 50 de trois autres poulies 51 autour desquelles passent les trois cables 40, 41, 42 s'enroulant plus bas sur des arbres 52 de treuil 53 portés par un plateau support de treuil 54.

L'ouverture des trois panneaux 26, 27, 28 s'effectuent par pivotement des pinces autour d'un axe d'articulation 55 transversal porté par les deux mats 34, 35.

L'angle d'ouverture peut être réglé et il peut varier jusqu'à 90° environ. Une butée formée d'une plaque métallique 56 portée par la poutre transversale 36 empêche les panneaux de basculer en arrière.

L'ouverture des deux panneaux les plus extérieurs 25, 29 peut s'effectuer manuellement ou à l'aide de moyens semblables non représentés.

Le fonctionnement du dispositif est décrit ci-après pour la fabrication d'articles en verre nécessitant une température du verre de 1150°C pour la paraison alors que la température du verre à la sortie du four est de 1320°C.

Le courant de verre arrive au compartiment refroidisseur à une température moyenne de 1300°C. Les trois panneaux centraux sont ouverts à 90°. Cette ouverture permet une évacuation d'une quantité de chaleur par radiation à l'air libre, telle qu'à la sortie dudit compartiment refroidisseur, la température moyenne du courant de verre est de 1275°C pour un débit de verre de 75 tonnes/jour. Le courant de verre pénètre dans la partie de conditionnement où il est simultanément soumis dans les deux sections 18, 19 à un refroidissement de sa partie médiane par un courant d'air longitudinal et un chauffage des parties latérales par des brûleurs, la température moyenne diminuant. Le verre arrive dans la section la plus en aval où il subit une dernière homogénéisation avant d'être délivré sous forme de paraison à une température de 1150°C à la machine de formage ou moulage.

L'invention permet d'alimenter une machine de formage ou moulage avec un verre homogène et présentant une température pouvant être le cas échéant très inférieure à celle à la sortie du four de fusion, et ceci pour tous les types de verre, blanc ou colorés, couramment utilisés dans la fabrication de bouteilles, flacons, gobelets, etc...

La variante utilisant une ouverture modulable est particulièrement bien adaptée au fonctionnement des feeders tournants dans lesquels les différentes veines du courant de verre sont amenées à parcourir des chemins de longueurs différentes.

## Revendications

1. Procédé pour obtenir des différences de températures variables et contrôlés pour un courant de verre (101) dans un feeder (1) entre la sortie d'un four de fusion et l'extrémité de sortie (21) du feeder, dans lequel on conditionne le courant de verre en refroidissant sa partie centrale et en chauffant simultanément ses parties latérales, caractérisé en ce que les opérations de conditionnement simultanées de refroidissement et de chauffage sont précédées d'un refroidissement du courant de verre par une évacuation contrôlée d'une partie de la chaleur dudit courant par radiation à l'air libre.

2. Procédé selon la revendication 1, caractérisé en ce que le refroidissement par radiation à l'air libre peut être réglé pour pouvoir s'exercer symétriquement ou dissymétriquement sur une plage transversale du courant de verre (101) pouvant aller d'une partie localisée à toute la largeur du courant.

3. Procédé selon la revendication 2, caractérisé en ce que la partie localisée est la partie médiane.

4. Procédé selon la revendication 2, caractérisé en ce que la partie localisée est une partie latérale.

5. Procédé selon une des revendications 1 ou 4, carctérisé en ce que le refroidissement au cours du conditionnement est réalisé à l'aide d'un flux gazeux notamment de l'air.

6. Procédé selon la revendication 5, caractérisé en ce que le flux gazeux s'écoule suivant l'axe longitudinal du courant de verre (101), au contact de celui-ci.

7. Feeder (1) pour le transfert du verre fondu entre un four de fusion du verre et une machine de formage ou moulage, comprenant au moins une partie (3) pour le conditionnement du courant de verre (101), cette partie comprenant des moyens pour le refroidissement de la partie centrale du courant de verre et des moyens de chauffage des deux parties latérales dudit courant, caractérisé en ce qu'il comprend en amont de cette partie pour le conditionnement, un compartiment refroidisseur (2) pour le courant de verre, ce compartiment étant muni d'au moins un panneau (25, 26, 27, 28, 29) pouvant être ouvert de façon contrôlée afin d'évacuer de façon contrôlée une partie de la chaleur du courant de verre par radiation à l'air libre.

8. Feeder selon la revendication 7, caractérisé en ce que l'ouverture du panneau (25, 26, 27, 28, 29) est réglable.

9. Feeder selon la revendication 8, caractérisé en ce que l'ouverture du panneau (25, 26, 27, 28, 29) est réglable par pivotement avec un sens de pivotement de préférence en amont.

10. Feeder selon une des revendications 7 à 9, caractérisé en ce que la largeur de l'ouverture est réglable.

11. Feeder selon une des revendications 7 à 10, caractérisé en ce que le compartiment refroidisseur est muni de plusieurs panneaux (25, 26, 27, 28, 29) disposés transversalement les uns à côtés des autres et pouvant être ouverts séparément ou en combinaison.

12. Feeder selon une des revendications 7 à 11, caractérisé en ce que la partie pour le conditionnement (3) utilise en tant que moyens de refroidissement de la partie centrale du courant de verre (101) des moyens provoquant une ventilation par un flux gazeux notamment de l'air.

13. Feeder selon la revendication 12, caractérisé en ce que le moyen de refroidissement de la partie centrale du courant de verre (101) sont des moyens provoquant une ventilation longitudinale au contact du courant de verre.

14. Feeder selon une des revendications 7 à 13, caractérisé en ce que la partie pour le conditionnement est formée de deux sections semblables (18, 19).

15. Feeder selon une des revendications 7 à 14, caractérisé en ce qu'on lui adjoint un refroidisseur annexe que l'on plonge dans le courant de verre (101) au niveau de l'ouverture du compartiment refroidisseur (2).

## Claims

1. Process for obtaining variable and controlled temperature differences for a current of glass (101) in a feeder (1) between the outlet from a melting furnace and the outlet end (21) of the feeder, in which the glass current is conditioned by cooling its central part and simultaneously heating its lateral parts, characterized in that the simultaneous conditioning operations of cooling and heating are preceded by a cooling of the glass current by a controlled removal of a portion of the heat from said current by radiation to the open air.

2. Process according to Claim 1, characterized in that the cooling by radiation to the open air may be regulated to enable it to be carried out symmetrically or asymmetrically over a transverse area of the glass current (101) that can range from a localized portion to the entire width of the current.

3. Process according to Claim 2, characterized in that the localized portion is the median portion.

4. Process according to Claim 2, characterized in that the localized portion is a lateral portion.

5. Process according to one of Claims 1 or 4, characterized in that the cooling during conditioning is carried out by means of a gaseous flow, notably of air.

6. Process according to Claim 5, characterized in that the gaseous flow flows along the longitudinal axis of the glass current (101) in contact with it.

7. Feeder (1) for transferring molten glass between a furnace for melting the glass and a shaping or moulding machine, comprising at least a part (3) for the conditioning of the glass current (101), this part comprising means for the cooling of the central part of the glass current and means for heating the two lateral parts of said current, characterized in that it comprises, upstream of this part for conditioning, a cooling compartment (2) for the glass current, this compartment being provided with at least one panel (25, 26, 27, 28, 29) capable of being opened in controlled manner in order to remove in controlled manner a portion of the heat of the glass current by radiation to the open air.

8. Feeder according to Claim 7, characterized in that the opening of the panel (25, 26, 27, 28, 29) is adjustable.

9. Feeder according to Claim 8, characterized in that the opening of the panel (25, 26, 27, 28, 29) is adjustable by pivoting in a preferably upstream pivoting sense.

10. Feeder according to one of Claims 7 to 9, characterized in that the width of the opening is adjustable.

11. Feeder according to one of Claims 7 to 10, characterized in that the cooler compartment is provided with several panels (25, 26, 27, 28, 29), disposed transversely alongside one another and capable of being opened separately or in combination.

12. Feeder according to one of Claims 7 to 11, characterized in that the part for conditioning (3) uses, as cooling means for the central part of the glass current (101), means causing a ventilation by a gaseous flow, notably of air.

13. Feeder according to Claim 12, characterized in that the cooling means of the central part of the glass current (101) are means causing a longitudinal ventilation in contact with the glass current.

14. Feeder according to one of Claims 7 to 13, characterized in that the part for the conditioning is formed of two similar sections (18, 19).

15. Feeder according to one of Claims 7 to 14, characterized in that there is associated with it a supplementary cooler which is immersed in the glass current (101) at the level of the opening of the cooler compartment (2).

## Patentansprüche

1. Verfahren zur Erzeugung variabler und geregelter Temperaturdifferenzen in einem Glasstrom (101) in einer Zufuhrleitung (1) zwischen dem Ausgang eines Schmelzofens und dem Ausgangsende (21) der Zufuhrleitung, in welchem man den Glasstrom behandelt, indem sein zentraler Bereich abgekühlt wird und gleichzeitig seine Seitenbereiche erhitzt werden, **dadurch gekennzeichnet, daß** den gleichzeitigen Behandlungsvorgängen des Kühlens und Erhitzens eine Kühlung des Glasstroms mittels eines geregelten Abzugs eines Teils seiner Wärmemenge durch Abstrahlung an die Umgebungsluft vorhergeht.

2. Verfahren nach Anspruch 1, **dadurch gekennzeichnet, daß** die Kühlung durch Abstrahlung an die Umgebungsluft geregelt sein kann, damit sie symmetrisch oder asymmetrisch auf einen Querbereich des Glasstroms (101) einwirken kann, der von einem lokalisierten Bereich bis zur gesamten Breite des Stroms reichen kann.

3. Verfahren nach Anspruch 2, **dadurch gekennzeichnet, daß** der lokalisierte Bereich der mittlere Bereich ist.

4. Verfahren nach Anspruch 2, **dadurch gekennzeichnet, daß** der lokalisierte Bereich ein Seitenbereich ist.

5. Verfahren nach Anspruch 1 oder 4, **dadurch gekennzeichnet, daß** die Kühlung während der Behandlung mittels eines Gas-und insbesondere Luftstroms durchgeführt wird.

6. Verfahren nach Anspruch 5, **dadurch gekennzeichnet, daß** der Gasstrom entlang der Längsachse des Glasstroms (101) und in Berührung mit diesem strömt.

7. Zufuhrleitung (1) für den Transport des geschmolzenen Glases zwischen einem Glasschmelzofen und einer Formgebungs- oder Gießmaschine, die wenigstens einen Teil (3) für die Behandlung des Glasstroms (101) umfaßt, wobei dieser Teil Mittel zum Kühlen des zentralen Bereichs des Glasstroms und Mittel zum Erhitzen der beiden Seitenbereiche dieses Stroms enthält, **dadurch gekennzeichnet, daß** sie stromaufwärts von diesem Behandlungsteil ein Abteil (2) zur Kühlung des Glasstroms enthält, wobei dieses Abteil mit wenigstens einer Klappe (25, 26, 27, 28, 29) ausgerüstet ist, die geregelt geöffnet werden kann, um einen Teil der Wärmemenge des Glasstroms durch Abstrahlung an die Umgebungsluft kontrolliert abzuziehen.

8. Zufuhrleitung nach Anspruch 7, **dadurch gekennzeichnet, daß** die Öffnung der Klappe (25, 26, 27, 28, 29) regelbar ist.

9. Zufuhrleitung nach Anspruch 8, **dadurch gekennzeichnet, daß** die Öffnung der Klappe (25, 26, 27, 28, 29) durch Schwenken in einer vorzugsweise stromaufwärtigen Schwenkrichtung regelbar ist.

10. Zufuhrleitung nach einem der Ansprüche 7 bis 9, **dadurch gekennzeichnet, daß** die Öffnungsweite regelbar ist.

11. Zufuhrleitung nach einem der Ansprüche 7 bis 10, **dadurch gekennzeichnet, daß** das Kühlabteil mit mehreren Klappen (25, 26, 27, 28, 29) ausgerüstet ist, die nebeneinander quer angeordnet sind und einzeln oder kombiniert geöffnet werden können.

12. Zufuhrleitung nach einem der Ansprüche 7 bis 11, **dadurch gekennzeichnet, daß** im Behandlungsteil (3) als Mittel zum Kühlen des zentralen Bereichs des Glasstroms (101) Mittel verwendet werden, die eine Belüftung durch einen Gas- und insbesondere einen Luftstrom bewirken.

13. Zufuhrleitung nach Anspruch 12, **dadurch gekennzeichnet, daß** das Mittel zum Kühlen des zentralen Bereichs des Glasstroms (101) Mittel sind, die eine Längsbelüftung in Berührung mit dem Glasstrom bewirken.

14. Zufuhrleitung nach einem der Ansprüche 7 bis 13, **dadurch gekennzeichnet, daß** der Behandlungsteil aus zwei ähnlichen Abschnitten (18, 19) gebildet ist.

15. Zufuhrleitung nach einem der Ansprüche 7 bis 14, **dadurch gekennzeichnet, daß** ihr ein Zusatzkühler hinzugefügt wird, der in Höhe der Öffnung des Kühlabteils (2) in den Glasstrom (101) eintaucht.
